# EUROPÄISCHE PATENTSCHRIFT

(11) **EP 3 528 042 B1**
(45) Veröffentlichungstag und Bekanntmachung des Hinweises auf die Patenterteilung: **20.05.2020**
(21) Anmeldenummer: 19152605.2
(22) Anmeldetag: 18.01.2019
(51) Int. Cl.: G03B 15/02

(54) **KAMERA UND VERFAHREN ZUR ERFASSUNG VON BILDDATEN**
CAMERA AND METHOD FOR DETECTING IMAGE DATA
CAMÉRA ET PROCÉDÉ DE DÉTECTION DES DONNÉES D'IMAGE

(30) Priorität: 16.02.2018 DE 102018103544
(43) Veröffentlichungstag der Anmeldung: 21.08.2019
(73) Patentinhaber: SICK AG, 79183 Waldkirch (DE)
(72) Erfinder: Schneider, Dr. Florian, 79276 Reute (DE); Pfrengle, Thomas, 79258 Hartheim (DE)

(56) Entgegenhaltungen:
- US-A1- 2003 231 494
- US-B1- 7 614 563
- US-B2- 6 614 596

## Beschreibung

Die Erfindung betrifft eine Kamera und ein Verfahren zur Erfassung von Bilddaten aus einem Erfassungsbereich nach dem Oberbegriff von Anspruch 1 beziehungsweise 12.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Um von variablen Lichtbedingungen unabhängig zu sein, verwenden viele industrielle Kamerasysteme eine eigene Beleuchtung. Man unterscheidet unterschiedliche Beleuchtungstypen. Neben der direkten Beleuchtung, die auch als Hellfeldbeleuchtung bezeichnet wird, sind unter anderem die Dunkelfeldbeleuchtung und die diffuse Beleuchtung bekannt. Solche Beleuchtungen werden herkömmlich sowohl direkt im Gerät verbaut wie als externe Beleuchtungen hinzugefügt.

Ein typisches Einsatzgebiet von Dunkelfeldbeleuchtungen ist die Erfassung mit metallischen Oberflächen. Das Licht wird dabei flach eingestrahlt. Nach dem Prinzip Einfallswinkel gleich Ausfallswinkel wird das gesamte Licht vom Betrachter beziehungsweise der Kamera weggelenkt, und das Feld bleibt deshalb dunkel. Strukturen wie schräge Kanten, Kratzer, Prägungen, Vertiefungen und Erhöhungen stören den Strahlengang des Lichts. An diesen Anomalien wird das Licht zur Kamera hin reflektiert oder meist nur gestreut. Diese Fehlstellen erscheinen dann im Kamerabild hell.

Bei einer Dunkelfeldbeleuchtung müssen die Beleuchtungslichtquellen gegebenenfalls samt Optik in einer bestimmten Position und Winkel zum Kamerasichtbereich angeordnet sein. Typischerweise befinden sich die Lichtquellen auf einer Kreisanordnung in einem bestimmten Winkel in Bezug auf die optische Achse der Kamera. Aus diesem Grund können sich die Lichtquellen nicht mehr auf einer gemeinsamen Elektronikkarte befinden.

Diffuses Licht kann in Applikationen nützlich sein, in denen spiegelnde, polierte, glänzende oder metallische Objekte geprüft werden müssen. Besonders schwierig wird es, wenn diese Oberflächen nicht mehr eben, sondern frei geformt, geknittert, gewölbt oder zylinderförmig sind.

In der EP 1 158 460 B1 werden in einem Einlernvorgang unterschiedliche Gruppen von Sendeelementen zum Aussenden von Licht angesteuert, und für den nachfolgenden Betrieb wird diejenige Ansteuerung und damit Beleuchtung verwendet, bei dem ein oder mehrere charakteristische Merkmale eines erfassten Objekts optimal sind. Die ringförmig angeordneten Sendeelemente können zwar Beleuchtungen aus verschiedenen Richtungen, nicht aber diffuse Beleuchtung oder eine Beleuchtung in einem für Dunkelfeldbeleuchtung hinreichend flachen Winkel erzeugen.

Die EP 1 687 752 B2 offenbart eine Bereitstellung einer omnidirektionalen Beleuchtung in einer Scanvorrichtung, die mit einem Bildsensor Codes liest. Den einzeln ansteuerbaren Lichtquellen einer Dunkelfeldbeleuchtung, die eine Empfangsoptik umgeben, ist jeweils ein Lichtleiterelement vorgeordnet, dessen Lichtaustrittsfläche das Licht nach innen umlenkt. Das Licht der Lichtquellen wird so lange variiert, bis ein in den Bilddaten enthaltener Code gelesen werden kann. Die Lichtleiter erfordern eine gewisse Tiefe, was für die beschriebene Anwendung in einem Handgerät unproblematisch, bei industriellen Kameras aber nachteilig ist. Außerdem ist je ein Lichtleiter pro Lichtquelle vorgesehen, so dass der Gesamtaufbau bei stärkeren Beleuchtungen mit vielen Lichtquellen recht komplex wird.

Die EP 1 68 8861 B1 verwendet vor der Beleuchtung eines Codelesers einen Aufsatz mit Reflektoren oder Lichtleitern, und das Licht fällt am anderen Ende des Aufsatzes unter flachem Winkel auf den Lesebereich. Dieser Aufsatz vergrößert aber den Codeleser ganz erheblich.

Aus der US 8 768 159 B2 ist eine kombinierte Dunkelfeld- und Hellfeldbeleuchtung bekannt. Es sind innere Lichtquellen vorgesehen, die direkt in den Erfassungsbereich strahlen und somit die Hellfeldbeleuchtung darstellen sowie äußere Lichtquellen mit einem Lichtleiter mit schräger Austrittsfläche für die Dunkelfeldbeleuchtung. Es handelt sich somit hinsichtlich der Dunkelfeldbeleuchtung um eine weitere Lösung mit Lichtleitern, welche die schon mehrfach genannten Nachteile hinsichtlich Komplexität und Baugröße mit sich bringt.

Die US 9 569 653 B1 beschreibt eine Dunkelfeldbeleuchtung in einer schrägen Ebene für einen Codeleser. Es sind jeweils eigene Lichtquellen für eine diffuse Beleuchtung, wofür das Licht einen Diffusor transmittiert, und die Dunkelfeldbeleuchtung mittels Reflektoren vorgesehen. Die Front des Codelesers ist um 15°-30° schräggestellt und soll bestimmungsgemäß bündig mit der Oberfläche des zu lesenden Codes gebracht werden. Das führt allerdings zu einem verzogenen und ein weiteres Mal in Sichtrichtung baugroßen Aufbau.

Die US 7 614 563 B1 befasst sich mit einem Handgerät zum Codelesen, das zwei Arrays von LEDs aufweist. Einem der Arrays ist ein äußerer Lichtleiter für eine Dunkelfeldbeleuchtung, dem anderen Array ein weiterer Lichtleiter für eine diffuse Beleuchtung zu geordnet.

Die US2003/0231494 A1 offenbart eine Ringbeleuchtung für ein Mikroskop. Das Licht von radial nach außen abstrahlenden LEDs wird von einem gekrümmten Spiegel nach innen zu dem zu betrachtenden Objekt auf der zentralen Ringachse umgelenkt. Je nach axialem Objektabstand wird der gekrümmte Spiegel axial geden die LEDs versetzt, damit das Licht den gekrümmten Spiegel an einer anderen Stelle trifft und weiterhin zu dem Objekt, nun in anderem axialem Abstand, umgelenkt wird.

In der US 6 614 596 B2 wird eine weitere Ringbeleuchtung für ein Kamerasystem mit einem äußeren, gekrümmten Spiegelring zum Umlenken des Lichts von LEDs nach Innen vorgestellt. Die LEDs können für unterschiedliche Lichteigenschaften in verschiedenen Kombinationen gemeinsam aktiviert werden.

Es ist daher Aufgabe der Erfindung, auf einfache und flexible Weise eine passende Beleuchtung zu erzeugen.

Diese Aufgabe wird durch eine Kamera und ein Verfahren zur Erfassung von Bilddaten aus einem Erfassungsbereich nach Anspruch 1 beziehungsweise 13 gelöst. Die Kamera nimmt mit einem Bildsensor Bilddaten aus dem Erfassungsbereich auf. Eine Beleuchtungseinheit mit mindestens einer Lichtquelle leuchtet dafür den Erfassungsbereich aus. Eine Frontscheibe schließt die Kamera beziehungsweise deren Gehäuse auf der Vorderseite, also in Blickrichtung der Kamera, und schützt dadurch insbesondere die Beleuchtungseinheit.

Die Erfindung geht von dem Grundgedanken aus, dass die Lichtquelle nicht direkt in den Erfassungsbereich strahlt, sondern ihr Licht zuvor auf ein der Lichtquelle zugeordnetes seitliches Umlenkelement trifft. Seitlich bedeutet hier einen Versatz in der Ebene senkrecht zur Sichtrichtung, die wiederum beispielsweise durch die optische Achse des Bildsensors beziehungsweise einer dem Bildsensor vorgeordneten Empfangsoptik festgelegt ist. Das von der Lichtquelle erzeugte Licht wird an dem Umlenkelement für eine diffuse Beleuchtung ungerichtet remittiert oder für eine Dunkelfeldbeleuchtung gerichtet reflektiert. Dementsprechend weist das Umlenkelement je nach zu erzeugender Beleuchtung eine remittierende oder spiegelnde Oberfläche auf. Umlenkelement und Lichtquelle befinden sich unter der Frontscheibe, also innerhalb der Kamera und von der Frontscheibe geschützt. Zumindest Teile des Umlenkelements können dabei auch mit der Frontscheibe gemeinsam ausgebildet sein, die dann Schutz- und Umlenkfunktion vereinigt.

Die Erfindung hat den Vorteil, dass eine modulare Dunkelfeldbeleuchtung oder diffuse Beleuchtung in eine Kamera integriert wird. Dadurch lässt sich die Kamera sehr viel einfacher an eine tatsächlich benötigte Beleuchtungssituation anpassen. Der Aufbau der Kamera ermöglicht kompakte und insbesondere flache Baugrößen.

Die Lichtquelle ist vorzugsweise mit Abstrahlrichtung quer zur Sichtrichtung der Kamera ausgerichtet. Dazu können vorzugsweise seitlich abstrahlende LEDs verwendet werden. Wie schon erwähnt, kann die Sichtrichtung der Kamera über die optische Achse des Bildsensors oder einer Empfangsoptik definiert werden. Das seitliche Umlenkelement ist in Abstrahlrichtung angeordnet, damit das ausgesandte Licht der Lichtquelle dort auftrifft. Eine Abstrahlrichtung quer zur Sichtrichtung bedeutet Winkel von mindestens 70°, mindestens 80° und vorzugsweise in etwa 90°. Auch etwas größere Winkel sind vorstellbar, das Umlenkelement lenkt dann entsprechend das zunächst mit leichter Rückwärtskomponente ausgesandte Licht in den Erfassungsbereich. Eine Abstrahlrichtung quer zur Sichtrichtung bedeutet, dass die Beleuchtung im Idealfall nicht mehr Bautiefe benötigt als das Umlenkelement selbst, da die Umlenkung praktisch in einer Ebene stattfindet. Daher ist eine extrem flache Bauweise der Beleuchtungseinheit möglich.

Die Lichtquelle ist bevorzugt mit Abstrahlrichtung nach außen angeordnet. Die Abstrahlrichtung hat dabei zumindest eine Komponente radial nach außen bezüglich der Sichtrichtung. Nach außen muss nicht direkt in Verlängerung der Verbindung zwischen Lichtquelle und optischem Mittelpunkt der Empfangsoptik bedeuten, beispielsweise wenn mehrere Lichtquellen zu einem Rechteck angeordnet sind und bezüglich dessen Kanten nach außen gerichtet sind. Durch die Abstrahlrichtung nach außen mit anschließender Umlenkung entsteht eine große Fläche, die insbesondere größer ist als die von mehreren Lichtquellen selbst gebildete Fläche, aus der das Licht effektiv abgestrahlt wird. Das wiederum ermöglicht flache Beleuchtungswinkel in größerem Abstand, somit wird durch die Orientierung der Lichtquelle nach außen die vorhandene Baugröße besser ausgenutzt.

Das Umlenkelement ist bevorzugt außen unter einem Rand der Frontscheibe angeordnet. Die Umlenkung geschieht so erst am äußersten Rand und damit in größtmöglichem Abstand zur Empfangsoptik. Damit wird die vorhandene Fläche sogar optimal ausgenutzt, weil praktisch der Rand der Vorderseite der Kamera zur effektiven Beleuchtungsquelle wird.

Das Umlenkelement ist bevorzugt als Rahmen ausgebildet. Dieser Rahmen umgibt die vorzugsweise mehreren Lichtquellen, die jeweils auf den Rahmen hin ausgerichtet sind. Ein solcher Rahmen kann sehr einfach in einen flachen Geräteaufbau integriert werden und bildet gleichsam die Ebene der Lichtumlenkung innerhalb der Kamera.

Frontscheibe und Rahmen sind vorzugsweise rechteckig. Der Rahmen ist unmittelbar an die Form der Frontscheibe angepasst. Das ist einfach herzustellen und ergibt auch einen einfachen Gesamtaufbau.

Das Umlenkelement ist bevorzugt nachträglich austauschbar, insbesondere als Wechselrahmen ausgebildet, um zwischen diffuser Beleuchtung und Dunkelfeldbeleuchtung zu wechseln und/oder durch andere Form des Umlenkelements Beleuchtungsparameter zu verändern. Je nach Bedarf in der jeweiligen Kamera oder sogar Anwendung wird ein passendes Umlenkelement eingesetzt. Dabei wird zwischen stumpfer, diffus remittierender Oberfläche und spiegelnder Oberfläche gewechselt, um eine diffuse Beleuchtung oder eine Dunkelfeldbeleuchtung zu erhalten. Außerdem kann ein Umlenkelement mit anderer Spiegelform eingesetzt werden, um einen anderen Beleuchtungswinkel, Leseabstand oder sonstigem durch Strahlformung und -richtung anpassbarem Beleuchtungsparameter einzustellen. Das Umlenkelement ist vorzugsweise ein Wechselrahmen, nochmals bevorzugt in rechteckiger Form. Das ist besonders einfach herzustellen und auszutauschen.

Das Umlenkelement ist bevorzugt mit der Frontscheibe verbunden und so gemeinsam mit der Frontscheibe austauschbar ausgebildet. Das erleichtert den Wechsel der Beleuchtung weiter. Es muss für eine Beleuchtungsanpassung lediglich die Frontscheibe samt Umlenkelement abgenommen und gegen eine andere Frontscheibe mit anderem Umlenkelement ausgetauscht werden.

Das Umlenkelement weist bevorzugt eine optisch wirksame Kontur, insbesondere eine konkave Kontur oder eine Freiformfläche auf. Dadurch wird die Beleuchtung gegenüber einer reinen Umlenkung durch flache Spiegel noch besser gezielt an die geforderten Beleuchtungsbedingungen angepasst.

Mehrere, insbesondere alle Lichtquellen der Beleuchtungseinheit sind bevorzugt auf einer gemeinsamen Leiterkarte angeordnet. Das ist deshalb möglich, weil das Umlenkelement für einen passenden Beleuchtungswinkel sorgt. Die Lichtquellen selbst können flach nebeneinander angeordnet werden, sie müssen selbst nicht im richtigen Winkel zum Erfassungsbereich stehen. Eine gemeinsame Leiterkarte verringert die Komplexität der Beleuchtungseinheit selbst und von deren Einbau und verringert so die Herstellkosten.

Die Beleuchtungseinheit weist bevorzugt mehrere einzeln ansteuerbare Gruppen von Lichtquellen auf. Jede der vorzugsweise gleich großen Gruppen umfasst mindestens eine Lichtquelle. Durch gezielte Aktivierung oder Intensitätsanpassung der Gruppen entstehen unterschiedliche Beleuchtungsszenarien, die durch Parameter vorgegeben, aber auch durch Feedback einer Auswertung der Bilddaten eingestellt oder eingelernt werden können. Vorzugsweise sind vier Gruppen je Kante eines als rechteckiger Rahmen ausgebildeten Umlenkelements vorgesehen. Dadurch wird dann durch einzelne Ansteuerung der Gruppen die Beleuchtung aus allen vier Richtungen veränderbar.

Die Beleuchtungseinheit weist bevorzugt Lichtquellen unterschiedlicher Farben auf. Manche Strukturen, insbesondere Codierungen bestimmter Farben auf bestimmtem Grund, lassen sich besser in einem passenden Beleuchtungsspektrum lesen. Das kann durch Einstellen einer Farbe für die Lichtquellen, aber auch Vermischen von Farben erreicht werden. Je nach Ausführungsform sind verschiedenfarbige Lichtquellen oder in ihrer Farbe umschaltbare Lichtquellen vorgesehen, wie mehrfarbige LEDs.

Die Kamera weist bevorzugt eine Steuer- und Auswertungseinheit auf, die dafür ausgebildet ist, in den Bilddaten Codebereiche zu identifizieren und deren Codeinhalt auszulesen. Damit wird die Kamera zu einem kamerabasierten Codeleser für Barcodes und/oder 2D-Codes nach diversen Standards, gegebenenfalls auch für eine Texterkennung (OCR, Optical Character Reading). Eine Steuer- und Auswertungseinheit ist im Übrigen vorzugsweise auch ohne Codelesefunktionalität vorgesehen, welche die diversen Aufgaben in der Kamera steuert und ausführt, wie die Bildaufnahme, eine Beleuchtung, die Messung von tatsächlicher und benötigter Fokuslage und deren Anzeige.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera mit Beleuchtung;
- Fig. 2: eine Frontalansicht der Kamera;
- Fig. 3: eine Detailansicht der Umlenkung der Beleuchtung;
- Fig. 4: eine schematische Darstellung der durch Umlenkung entstehenden Beleuchtung und des Sichtbereichs der Kamera; und
- Fig. 5: eine dreidimensionale Ansicht einer beispielhaften Anwendung der Kamera in Montage an einem Förderband.

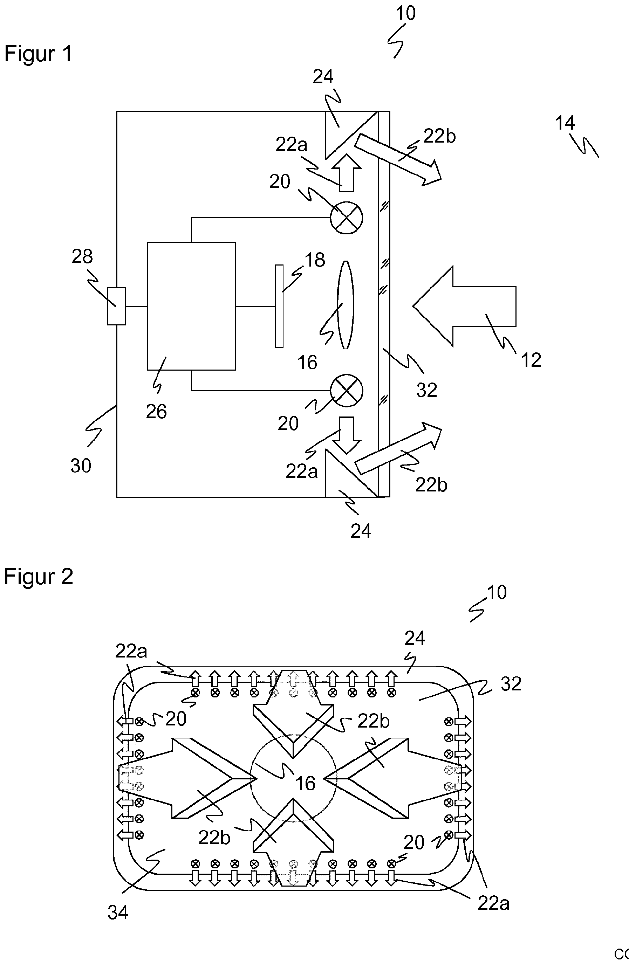

Figur 1 zeigt eine schematische Schnittdarstellung einer Kamera 10. Empfangslicht 12 aus einem Erfassungsbereich 14 trifft auf eine Empfangsoptik 16, die das Empfangslicht 12 auf einen Bildsensor 18 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert.

Um den Erfassungsbereich 14 während einer Aufnahme der Kamera 10 auszuleuchten, umfasst die Kamera 10 eine Beleuchtungseinheit, die in Figur 1 in Form zweier Lichtquellen 20 dargestellt ist, beispielsweise LEDs oder auch Laserdioden. Den Lichtquellen 20 kann eine nicht gezeigte Sendeoptik zugeordnet sein.

Die Lichtquellen 20 strahlen nicht direkt in den Erfassungsbereich 14. Stattdessen ist ihr Sendelicht 22a zunächst auf ein seitliches Umlenkelement 24 ausgerichtet. Das Umlenkelement 24 besitzt je nach Anwendung der Kamera 10 eine spiegelnde oder diffuse Oberfläche, die aus dem Sendelicht 22a eine Dunkelfeldbeleuchtung 22b mit flachem Einstrahlwinkel in den Erfassungsbereich 14 oder eine diffuse Beleuchtung 22b erzeugt. Das Umlenkelement 24 und der Strahlengang des Sendelichts 22a-b wird später unter Bezugnahme auf die Figuren 2 bis 4 näher erläutert.

Eine Steuer- und Auswertungseinheit 26 ist mit der Beleuchtungseinheit und dem Bildsensor verbunden und für die Steuerungs-, Auswertungs- und sonstigen Koordinierungsaufgaben in der Kamera 10 zuständig. Sie liest also Bilddaten des Bildsensors 18 aus, um sie zu verarbeiten und an einer Schnittstelle 28 auszugeben. Es sind auch eigene Auswertungen der Bilddaten denkbar, insbesondere das Decodieren von Codebereichen in den Bilddaten, womit die Kamera 10 zu einem kamerabasierter Codeleser wird.

Die Kamera 10 wird durch ein Gehäuse 30 geschützt, das im vorderen Bereich, wo das Empfangslicht 12 einfällt und das Sendelicht 22b austritt, durch eine Frontscheibe 32 abgeschlossen ist.

Figur 2 zeigt eine Ausführungsform einer Kamera 10 in einer Frontalansicht. Die Front der Kamera 10 und deren Frontscheibe 32 sind rechteckig, wobei gerundete Ecken andeuten, dass diese Form nicht in einem engen mathematischen Sinn zu verstehen ist. An den Kanten des Rechtecks, aber dagegen je nach Ausführungsform mehr oder weniger weit nach innen versetzt, sind jeweils eine Vielzahl von Lichtquellen 20 der Beleuchtungseinheit angeordnet. Die Lichtquellen 20 sind vorzugsweise auf einer gemeinsamen Leiterkarte 34 untergebracht.

Das Umlenkelement 24 ist als ebenfalls im Wesentlichen rechteckiger, die Lichtquellen 20 umgebender Reflexrahmen ausgebildet, der vorzugsweise den äußeren Rand der Front der Kamera 10 bildet, um die vorhandene Fläche möglichst vollständig auszunutzen. Die Lichtquellen 20 senden ihr Sendelicht 22a nach außen in Richtung zu dem Umlenkelement 24 oder Reflexrahmen. Dort wird das Sendelicht 22a je nach Ausführungsform des Umlenkelements 24 diffus oder gerichtet in den Erfassungsbereich 14 umgelenkt. Die entsprechende diffuse Beleuchtung 22b oder Dunkelfeldbeleuchtung 22b tritt in der Frontalansicht der Figur 2 mit flachem Einstrahlwinkel aus der Papierebene heraus in den Erfassungsbereich 14. Bei einer diffusen Beleuchtung 22b lässt sich im Gegensatz zu einer gerichteten Dunkelfeldbeleuchtung 22b die Richtung natürlich nur für einen zentralen Anteil angeben

Vorzugsweise sind die Lichtquellen 20 einzeln ansteuerbar und ermöglichen dadurch variable Beleuchtungszonen. Um die Schaltungskomplexität zu verringern, kann es genügen, Gruppen von Lichtquellen 20 nur gemeinsam anzusteuern. Eine Variante dabei ist, die an einer jeweiligen Kante des Rechtecks angeordneten Lichtquellen 20 als jeweils eine Gruppe zusammenzufassen. Dann lässt sich gezielt eine Beleuchtung 22b aus bestimmten Richtungen erzeugen, insbesondere im Zusammenspiel mit einer Bildverarbeitung der Bilddaten des Bildsensors 18 in der Steuer- und Auswertungseinheit 26, um auf diesem Weg eine für die jeweilige Anwendung bestmögliche Beleuchtungseinstellung zu finden.

In einer weiteren bevorzugten Ausführungsform werden mehrfarbige Lichtquellen 20 eingesetzt. Die mehreren Farben können schon in einer jeweiligen Lichtquelle 20 erzeugt werden, wie bei einer mehrfarbigen LED, oder es werden Lichtquellen 20 unterschiedlicher Farben nebeneinander eingesetzt, die wahlweise für bestimmte Farben aktiviert werden. Durch Farbwechsel der Beleuchtung 22b werden manche Strukturen besser erkennbar, etwa je nach Druckfarbe und Untergrund Codes besser in rotem oder in blauem Licht gelesen. Ein spiegelndes Umlenkelement 24 erzeugt dabei keine chromatische Aberration.

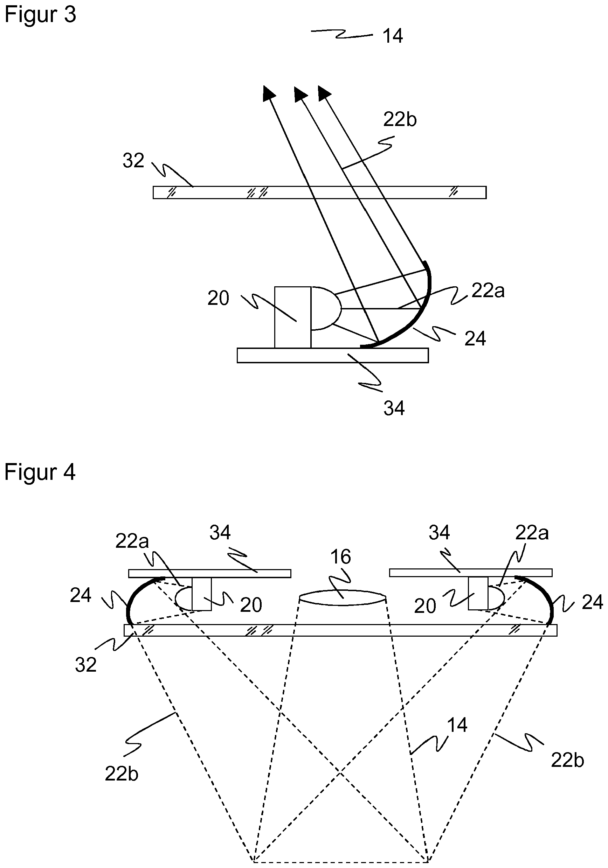

Figur 3 zeigt einen Detailaufbau mit dem Strahlengang von Sendelicht 22a und Beleuchtung 22b an dem Umlenkelement 24 im Querschnitt. Die Lichtquelle 20 ist hier eine LED mit seitlichem Lichtaustritt, demnach senkrecht zur Sichtrichtung der Kamera 10. Die Abstrahlrichtung ist vorzugsweise zumindest quer zur Sichtrichtung, d.h. auch ein etwas von der orthogonalen Ausrichtung abweichender Winkelbereich von beispielsweise 70°-110° ist denkbar. Das lässt sich anstatt durch eine seitlich abstrahlende LED beispielsweise auch mit einer Lichtumlenkung an der Lichtquelle 20 erreichen.

Das in Figur 3 mit spiegelnder Oberfläche ausgeführte Umlenkelement 24 lenkt das Sendelicht 22a in Richtung des Erfassungsbereichs 14. Dabei kann der Eintrittswinkel in dem Erfassungsbereich 14 durch entsprechende Ausgestaltung des Umlenkelements 24 auch flacher oder steiler sein als dargestellt, je nachdem, in welchem Abstand und in welcher Form eine Dunkelfeldbeleuchtung 22b benötigt wird.

Die Kontur des Umlenkelements 24 ist so ausgebildet, dass so viel Sendelicht 22a wie möglich in den Erfassungsbereich 14 gelenkt wird. Im gezeigten Beispiel ist eine konkave, also bündelnde Kontur gewählt. Über die Krümmung und den effektiven Kippwinkel der Kontur lassen sich Parameter der Dunkelfeldbeleuchtung 22b einstellen, wie Arbeitsabstand, Einstrahlwinkel, Größe und Geometrie des Erfassungsbereichs 14 oder Intensitätsverteilung. Die Kontur kann dafür auch als Freiform ausgebildet sein.

Derartige optische Wirkungen können anstelle einer bestimmten Kontur des Umlenkelements 24 oder damit zusammenwirkend auch mittels zusätzlicher, nicht gezeigter optischer Komponenten zwischen Lichtquelle 20 und Umlenkelement 24 erzielt werden, die etwa das Sendelicht 22a in vertikaler Richtung der Figur 3 fokussieren und so gebündelt auf das Umlenkelement 24 treffen lassen. Weiterhin kann die Frontscheibe 32 mit einer optisch funktionalen Struktur versehen werden, etwa eine eingeprägte Linse, ein Prisma oder eine diffraktive Struktur, die für eine weitere Bündelung oder eine zusätzliche Änderung des Einstrahlwinkels in dem Erfassungsbereich 14 sorgt.

Wahlweise ist es möglich, das Umlenkelement 24 mit spiegelnder Oberfläche durch ein solches mit diffus streuender Oberfläche zu ersetzen. Dann entsteht keine Dunkelfeldbeleuchtung 22b, sondern eine diffuse Beleuchtung 22b.

Die Kamera 10 unterstützt Wechsel zwischen Dunkelfeldbeleuchtung 22b und diffuser Beleuchtung 22b und/oder eine Anpassung der Beleuchtungsparameter durch einen sehr einfachen Umbau, bei dem das Umlenkelement 24 durch ein zu den neuen Anforderungen passendes Umlenkelement 24 ausgetauscht wird. Dazu ist das Umlenkelement 24 in der Kamera 10 nur lösbar fixiert. Im Falle eines als Rahmen ausgebildeten Umlenkelements 24, wie zu Figur 2 vorgestellt wurde, handelt es sich um einen Wechselrahmen, der zwischen Frontscheibe 32 und übrigem Gehäuse 30 eingesetzt ist. In einer besonders bevorzugten Ausführungsform ist das Umlenkelement 24 oder der Wechselrahmen an der Frontscheibe 32 befestigt und bildet so ein gemeinsames Bauteil. Dann wird ein Wechsel des Umlenkelements 24 und folglich zwischen Dunkelfeldbeleuchtung 22b und diffuser Beleuchtung 22b beziehungsweise eine Anpassung von Beleuchtungsparametern ganz einfach durch Austausch der Frontscheibe 32 bewirkt.

Figur 4 zeigt nochmals eine Schnittansicht des vorderen Bereichs der Kamera 10, um den Erfassungsbereich 14 und den hier mit einer Dunkelfeldbeleuchtung 22b ausgeleuchteten Bereich zu illustrieren. Es wird ein seitlicher Einstrahlwinkel erzielt, obwohl die Lichtquellen 20 selbst in einer Ebene bestückt sind. Die Lücke zwischen den gezeigten Abschnitten der Leiterkarte 34 ist der Schnittansicht geschuldet, es kann sich dennoch um dieselbe Leiterkarte 34 mit einer zentralen Öffnung für das Empfangslicht 12 handeln, wie in der Frontalansicht der Figur 2 zu erkennen.

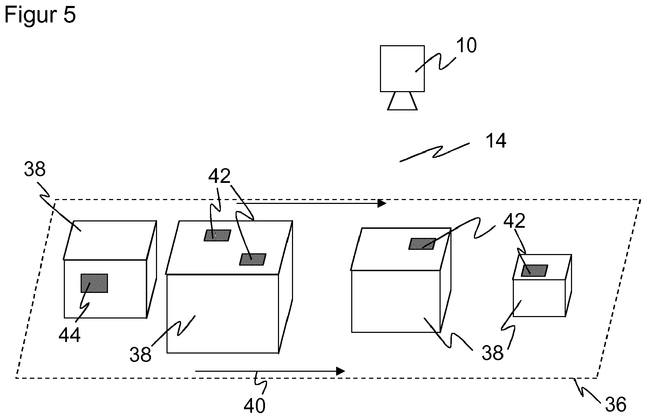

Figur 5 zeigt eine mögliche Anwendung der Kamera 10 in Montage an einem Förderband 36, welches Objekte 38, wie durch den Pfeil 40 angedeutet, durch den Erfassungsbereich 14 der Kamera 10 fördert. Die Objekte 38 können an ihren Außenflächen Codebereiche 42 tragen. Aufgabe der Kamera 10 ist, Eigenschaften der Objekte 38 zu erfassen und in einem bevorzugten Einsatz als Codeleser die Codebereiche 42 zu erkennen, die dort angebrachten Codes auszulesen, zu dekodieren und dem jeweils zugehörigen Objekt 38 zuzuordnen. Um auch seitlich angebrachte Codebereiche 44 zu erkennen, werden vorzugsweise zusätzliche, nicht dargestellte Kameras 10 aus unterschiedlicher Perspektive eingesetzt.

## Patentansprüche

1. Kamera (10), die einen Bildsensor (18) zur Erfassung von Bilddaten aus einem Erfassungsbereich (14), eine Beleuchtungseinheit (20, 24) mit mindestens einer Lichtquelle (20) zum Ausleuchten des Erfassungsbereichs (14), eine Frontscheibe (32) sowie ein der Lichtquelle (20) zugeordnetes seitliches Umlenkelement (24) aufweist, das von der Frontscheibe (32) geschützt in der Kamera (10) angeordnet ist und eine diffus streuende Oberfläche oder eine spiegelnde Oberfläche aufweist, um in dem Erfassungsbereich (14) eine diffuse Beleuchtung (22b) oder eine Dunkelfeldbeleuchtung (22b) zu erzeugen,
**dadurch gekennzeichnet,**
**dass** das Umlenkelement (24) nachträglich austauschbar ist, um zwischen diffuser Beleuchtung (22b) und Dunkelfeldbeleuchtung (22b) zu wechseln und/oder durch andere Form des Umlenkelements (24) Beleuchtungsparameter zu verändern.

2. Kamera (10) nach Anspruch 1,
wobei die Lichtquelle (20) mit Abstrahlrichtung quer, insbesondere senkrecht zur Sichtrichtung der Kamera (10) ausgerichtet ist.

3. Kamera (10) nach Anspruch 1 oder 2,
wobei die Lichtquelle (20) mit Abstrahlrichtung nach außen angeordnet ist.

4. Kamera (10) nach einem der vorhergehenden Ansprüche,
wobei das Umlenkelement (24) außen unter einem Rand der Frontscheibe (32) angeordnet ist.

5. Kamera (10) nach einem der vorhergehenden Ansprüche,
wobei das Umlenkelement (24) als Rahmen ausgebildet ist.

6. Kamera (10) nach Anspruch 5,
wobei Frontscheibe (32) und Rahmen rechteckig sind.

7. Kamera (10) nach einem der vorhergehenden Ansprüche,
wobei das Umlenkelement (24) als Wechselrahmen ausgebildet ist.

8. Kamera (10) nach einem der vorhergehenden Ansprüche,
wobei das Umlenkelement (24) mit der Frontscheibe (32) verbunden und so gemeinsam mit der Frontscheibe (32) austauschbar ausgebildet ist.

9. Kamera (10) nach einem der vorhergehenden Ansprüche,
wobei das Umlenkelement (24) eine optisch wirksame Kontur, insbesondere eine konkave Kontur oder eine Freiformfläche aufweist.

10. Kamera (10) nach einem der vorhergehenden Ansprüche,
wobei mehrere Lichtquellen (20) der Beleuchtungseinheit (20, 24) auf einer gemeinsamen Leiterkarte (34) angeordnet sind.

11. Kamera (10) nach einem der vorhergehenden Ansprüche,
wobei die Beleuchtungseinheit (20, 24) mehrere einzeln ansteuerbare Gruppen von Lichtquellen (20) und/oder Lichtquellen (20) unterschiedlicher Farben aufweist.

12. Kamera (10) nach einem der vorhergehenden Ansprüche,
die eine Steuer- und Auswertungseinheit (28) aufweist, die dafür ausgebildet ist, in den Bilddaten Codebereiche zu identifizieren und deren Codeinhalt auszulesen.

13. Verfahren zur Erfassung von Bilddaten aus einem Erfassungsbereich (14), wobei der Erfassungsbereich (14) von einer Beleuchtungseinheit (20, 24) mit mindestens einer Lichtquelle (20) durch eine Frontscheibe (32) hindurch ausgeleuchtet wird, wobei der Erfassungsbereich (14) mittels eines von der Frontscheibe (32) geschützten, der Lichtquelle (20) zugeordneten seitlichen Umlenkelements (24) mit einer diffus streuenden Oberfläche oder einer spiegelnden Oberfläche mit einer diffusen Beleuchtung (22b) oder eine Dunkelfeldbeleuchtung (22b) ausgeleuchtet wird,
**dadurch gekennzeichnet,**
**dass** das Umlenkelement (24) nachträglich austauschbar ist, um zwischen diffuser Beleuchtung (22b) und Dunkelfeldbeleuchtung (22b) zu wechseln und/oder durch andere Form des Umlenkelements (24) Beleuchtungsparameter zu verändern.

## Claims

1. A camera (10) comprising an image sensor (18) for detecting image data from a detection zone (14), an illumination unit (20, 24) having at least one light source (20) for illuminating the detection zone (14), and a front screen (32) as well as a lateral deflection element (24) that is associated with the light source (24), the lateral deflection element (24) being arranged in the camera (10) protected by the front screen (32) and having a diffusely scattering surface or a reflective surface in order to generate a diffuse illumination (22b) or a dark field illumination (22b) in the detection zone (14),
**characterized in that** the deflection element (24) is subsequently replaceable in order to change between diffuse illumination (22b) and dark field illumination (22b) and/or in order to modify illumination parameters by a different shape of the deflection element (24).

2. The camera (10) in accordance with claim 1,
wherein the light source (20) is aligned with a direction of irradiation transverse, in particular perpendicular, to the viewing direction of the camera (10).

3. The camera (10) in accordance with claim 1 or 2,
wherein the light source (20) is arranged with the direction of irradiation toward the outside.

4. The camera (10) in accordance with any of the preceding claims,
wherein the deflection element (24) is arranged externally beneath a margin of the front screen (32).

5. The camera (10) in accordance with any of the preceding claims,
wherein the deflection element (24) is configured as a frame.

6. The camera (10) in accordance with claim 5,
wherein the front screen (32) and the frame are rectangular.

7. The camera (10) in accordance with any of the preceding claims,
wherein the deflection element (24) is configured as an exchangeable frame.

8. The camera (10) in accordance with any of the preceding claims,
wherein the deflection element (24) is connected to the front screen (32) and is thus configured as replaceable together with the front screen (32).

9. The camera (10) in accordance with any of the preceding claims,
wherein the deflection element (24) has an optically effective contour, in particular a concave contour or a free-form surface.

10. The camera (10) in accordance with any of the preceding claims,
wherein a plurality of light sources (20) of the illumination unit (20, 24) are arranged on a common circuit board (34).

11. The camera (10) in accordance with any of the preceding claims,
wherein the illumination unit (20, 24) comprises a plurality of controllable groups of light sources (20) and/or light sources (20) of different colors.

12. The camera (10) in accordance with any of the preceding claims,
comprising a control and evaluation unit (28) that is configured to identify code regions in the image data and to read their code content.

13. A method of detecting image data from a detection zone (14), wherein the detection zone (14) is illuminated through a front screen (32) by an illumination unit (20, 24) having at least one light source (20), wherein the detection zone (14) is illuminated with a diffuse illumination (22b) or a dark field illumination (22b) by means of a lateral deflection element (24), protected by the front screen (32) and associated with the light source (20) and having a diffusely scattering surface or a reflective surface, **characterized in that** the deflection element (24) is subsequently replaceable in order to change between diffuse illumination (22b) and dark field illumination (22b) and/or in order to modify illumination parameters by a different shape of the deflection element (24).

## Revendications

1. Caméra (10) comprenant un capteur d'images (18) pour acquérir des données d'images à partir d'une zone de détection (14), une unité d'éclairage (20, 24) pourvue d'au moins une source de lumière (20) pour éclairer la zone de détection (14), une vitre frontale (32) ainsi qu'un élément de déviation (24) latéral associé à la source de lumière (20) et disposé dans la caméra (10) de façon protégée par la vitre frontale (32) et pourvu d'une surface de dispersion diffuse ou d'une surface réfléchissante, afin de créer un éclairage diffus (22b) ou un éclairage en champ sombre (22b) dans la zone de détection (14),
**caractérisée en ce que**
l'élément de déviation (24) est interchangeable à posteriori afin de changer entre un éclairage diffus (22b) et un éclairage en champ sombre (22b) et/ou de modifier des paramètres d'éclairage au moyen d'une autre forme de l'élément de déviation (24).

2. Caméra (10) selon la revendication 1,
dans laquelle
la source de lumière (20) est orientée de manière à ce que la direction d'émission soit transversale, en particulier perpendiculaire à la direction de vision de la caméra (10).

3. Caméra (10) selon la revendication 1 ou 2,
dans laquelle
la source de lumière (20) est disposée de manière à ce que la direction d'émission soit orientée vers l'extérieur.

4. Caméra (10) selon l'une des revendications précédentes,
dans laquelle
l'élément de déviation (24) est disposé à l'extérieur au-dessous d'un bord de la vitre frontale (32).

5. Caméra (10) selon l'une des revendications précédentes,
dans laquelle
l'élément de déviation (24) est réalisé sous forme de cadre.

6. Caméra (10) selon la revendication 5,
dans laquelle
la vitre frontale (32) et le cadre sont rectangulaires.

7. Caméra (10) selon l'une des revendications précédentes,
dans laquelle
l'élément de déviation (24) est réalisé sous forme de cadre interchangeable.

8. Caméra (10) selon l'une des revendications précédentes,
dans laquelle
l'élément de déviation (24) est relié à la vitre frontale (32) et est ainsi interchangeable conjointement avec la vitre frontale (32).

9. Caméra (10) selon l'une des revendications précédentes,
dans laquelle
l'élément de déviation (24) présente un contour à effet optique, en particulier un contour concave ou une surface de forme libre.

10. Caméra (10) selon l'une des revendications précédentes,
dans laquelle
plusieurs sources de lumière (20) de l'unité d'éclairage (20, 24) sont disposées sur une même carte de circuit imprimé (34).

11. Caméra (10) selon l'une des revendications précédentes,
dans laquelle
l'unité d'éclairage (20, 24) comprend plusieurs groupes de sources de lumière (20) pilotables individuellement et/ou des sources de lumière (20) de différentes couleurs.

12. Caméra (10) selon l'une des revendications précédentes,
comportant une unité de commande et d'évaluation (28) qui est réalisée pour identifier les zones de code dans les données d'images et pour lire leur contenu de code.

13. Procédé pour acquérir des données d'images à partir d'une zone de détection (14),
dans lequel
la zone de détection (14) est éclairée à travers une vitre frontale (32) par une unité d'éclairage (20, 24) pourvue d'au moins une source de lumière (20),
la zone de détection (14) est éclairée par un éclairage diffus (22b) ou par un éclairage en champ sombre (22b) au moyen d'un élément de déviation (24) latéral associé à la source de lumière (20) et protégé par la vitre frontale (32) et pourvu d'une surface de dispersion diffuse ou d'une surface réfléchissante,
**caractérisé en ce que**
l'élément de déviation (24) est interchangeable à posteriori afin de changer entre un éclairage diffus (22b) et un éclairage en champ sombre (22b) et/ou de modifier des paramètres d'éclairage au moyen d'une autre forme de l'élément de déviation (24).
